**Europäisches Patentamt**

**European Patent Office**

**Office européen des brevets**

(19)

(11) Publication number : **0 518 677 A2**

## (12) EUROPEAN PATENT APPLICATION

(21) Application number : **92305388.8**

(22) Date of filing : **11.06.92**

(51) Int. Cl.⁵ : **F16L 21/02**

(30) Priority : **11.06.91 GB 9112538**

(43) Date of publication of application :
**16.12.92 Bulletin 92/51**

(84) Designated Contracting States :
**DE ES FR GB IT**

(71) Applicant : **BIWATER INDUSTRIES LIMITED**
**Clay Cross**
**Chesterfield, Derbyshire S45 9NG (GB)**

(72) Inventor : **Whitworth, Charles Victor**
**10 Sylvan Drive, Old Tupton**
**Chesterfield, Derbyshire (GB)**

(74) Representative : **W.P. THOMPSON & CO.**
**Eastcheap House Central Approach**
**Letchworth, Hertfordshire SG6 3DS (GB)**

(54) **Pipe joint.**

(57)   A pipe joint between two pipe sections (10, 12) of the same outer diameter has a smooth outer surface in the region of the joint. A first fitting (18) is secured to or is integral with the end of one pipe section (10) and provides a spigot portion (20) of reduced diameter. A second fitting (22) is secured to or is integral with the end of the other pipe section (12). This defines a socket for the spigot portion (20) and locates and anchors a sealing gasket (28).

EP 0 518 677 A2

This invention relates generally to pipe joints.

Various types of spigot and socket pipe couplings are known which incorporate an annular sealing member between the outer socket end of one pipe and the inner spigot end of the other pipe. However, in most of these pipe couplings the socket end of the one pipe is of greater outer diameter than the outer diameter of the spigot end of the other pipe,,,with the result that when the coupling is effected the complete pipe run has protuberant portions at spaced intervals along its length.

It is an object of the present invention to provide a pipe joint by means of which it is possible to achieve a completed pipe run which has a substantially constant outer diameter with no such protuberant zones.

In accordance with one aspect of the present invention there is provided a pipe joint comprising a first pipe section, a second pipe section and sealing means therebetween, characterised in that said first pipe section has a spigot portion of lesser diameter than the general diameter of the pipe section, and the second pipe section has the same outer diameter as that of the first pipe section and has its end acting as a socket for the spigot portion, the pipe sections abutting with a substantially smooth outer surface.

In accordance with another aspect of the present invention there is provided a pipe joint comprising a first pipe section, a second pipe section and sealing means therebetween, characterised by a first fitting secured within the end of the first pipe section and which provides a generally longitudinally extending spigot portion of reduced diameter, and a second fitting secured within the end of the second pipe section and which includes an abutment portion having substantially the same outer diameter as the outer diameter of the two pipe sections and against which the ends of the pipe sections abut.

Preferably, the sealing means comprises an annular gasket in sealing contact with the spigot portion and subjected to compressing force by the socket end of the second pipe section.

The second fitting is preferably provided with a generally radially inwardly projecting rib or flange which projects into the sealing means to anchor the sealing means in relation to the second fitting.

With a construction of this nature one can achieve a pipe run with a substantially smooth external surface.

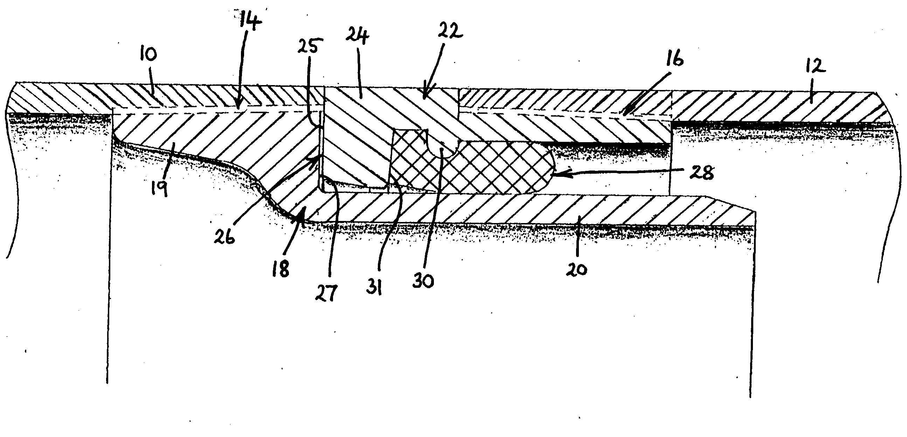

In order that the invention may be more fully understood, one presently preferred embodiment of pipe joint in accordance with the invention will now be described by way of example and with reference to the accompanying drawing which is a partial longitudinal sectional view through the pipe joint.

As shown in the drawing, the joint connects a first cylindrical pipe 10 to a second cylindrical pipe 12. The end portion of pipe 10 is slightly tapered on the inside and is provided with an internal screw thread 14 along this length. The end portion of pipe 12 is similarly tapered internally and is also provided with a screw thread 16 along this length. The two pipes 10, 12 have the same outer diameter. A first fitting 18 which is of annular configuration and which has an external screw thread over the portion 19 thereof which is of largest diameter is screwed into the open end of pipe 10 and the joint is sealed. This fitting 18 has a generally cylindrical spigot portion 20 which projects out beyond the end of the pipe 10 and which is of smaller diameter than the pipe itself. A second fitting 22 is screwed in similar manner into the end of pipe 12 to form a sealed joint therewith. The second fitting 22 includes an abutment portion 24 which is of annular block form and which has an outer circumferential surface which is flush with the external diameter of the two pipes 10, 12.

As shown in the drawing, the dimensions of the first fitting 18 and second fitting 22 are such than when the joint is assembled there is a radially extending gap 26 between the end face 25 of the abutment portion 24 of the second fitting 22 and the opposing, radially extending end face 27 of the first fitting 18.

An annular sealing gasket 28 of resilient material is located between the spigot portion 20 of the first fitting 18 and the second fitting 22. This gasket may be of the type known as a "Tyton" gasket. It is anchored in place within the pipe joint by a circumferential, radially inwardly projecting rib 30 which is provided on the second fitting 22 and which exerts a compressive force on the material of the gasket, thereby holding it anchored in place within the joint, and effecting a seal between the two fittings 18,22. The gasket 28 also abuts against a generally radial face 31 of the block-like portion of the second fitting 22, thus assisting the anchoring of the gasket within the joint. It is important to the satisfactory functioning of the gasket as a seal that the dimensions of the spigot portion 20 and the internal diameter of the fitting 22 are such that the combination operates in the manner of the known "Tyton" joint.

Various modifications can be made to the pipe joint as described above. For example, the two fittings 18 and 22 can be welded to the respective pipe sections 10 and 12 as an alternative to the screw fixing. As yet a further alternative the pipe sections 10 and 12 can be cast with ends shaped to correspond to the said fittings 18 and 22, instead of having separate fittings.

With the pipe joint as illustrated, the spigot portion 20, whether part of fitting 18 or integral with pipe section 10, forms a protuberance into the internal bore of the pipe run. In order to avoid this, and to produce an internal flow path without substantial discontinuities, the pipe bore can be lined with a suitable liner either before assembly of the joint or in situ after assembly of the joint.

## Claims

1. A pipe joint comprising a first pipe section (10), a second pipe section (12) and sealing means (28) therebetween, characterised in that said first pipe section (10) has a spigot portion (20) of lesser diameter than the general diameter of the pipe section (10), and the second pipe section (12) has the same outer diameter as that of the first pipe section and has its end acting as a socket for the spigot portion, the pipe sections abutting with a substantially smooth outer surface.

2. A pipe joint comprising a first pipe section (10), a second pipe section (12) and sealing means (28) therebetween, characterised by a first fitting (18) secured within the end of the first pipe section (10) and which provides a generally longitudinally extending spigot portion (20) of reduced diameter, and a second fitting (22) secured within the end of the second pipe section (12) and which includes an abutment portion (24) having substantially the same outer diameter as the outer diameter of the two pipe sections (10,12) and against which the ends of the pipe sections abut.

3. A pipe joint as claimed in claim 1 or 2, characterised in that the sealing means comprises an annular gasket (28) in sealing contact with the spigot portion (20) and subjected to compressive force by the socket end of the second pipe section.

4. A pipe joint as claimed in claim 2, characterised in that the fittings (18, 22) are screwed to the ends of the respective pipe sections (10, 12).

5. A pipe joint as claimed in claim 2, characterised in that the fittings (18, 22) are welded to the ends of the respective pipe sections (10, 12).

6. A pipe joint as claimed in claim 2, 4 or 5, characterised in that the second fitting (22) includes a radially projecting rib (30) in compressing contact with the sealing means (28) and a generally radial abutment surface (31) in contact with the sealing means (28).

7. A pipe joint as claimed in claim 2,4,5 or 6, characterised in that a substantially radial gap (26) is provided between the outer end of the abutment portion (24) of the second fitting (22) and the adjacent opposing surface (27) of the first fitting (18).

8. A pipe joint as claimed in any preceding claim, characterised in that the internal bore of the pipe sections (10, 12) is lined.